# EUROPEAN PATENT APPLICATION

(11) **EP 4 848 241 A1**
(43) Date of publication of application: **02.12.2026**
(21) Application number: 25751206.1
(22) Date of filing: 21.01.2025
(51) Int. Cl.: G06V 40/70

(54) **OBJECT AUTHENTICATION METHOD**

(30) Priority: 05.02.2024 CN 202410165735
(71) Applicant: ZTE CORPORATION, Shenzhen, Guangdong 518057 (CN)
(72) Inventor: CHEN, Jun, Shenzhen, Guangdong 518057 (CN)
(74) Representative: Verdecchia, Valerio
(86) International application number: PCT/CN2025/073743
(87) International publication number: WO 2025/167604

(57) **Abstract**

Provided is a method for object authentication, applied to a first terminal, the method including: sending, to an authentication device, first request information for authenticating N objects in a video, wherein the first request information carries first feature information of the N objects, N≥1; sending an authentication instruction to terminals where the N objects are located, wherein the authentication instruction is used for instructing the terminals to send second request information to the authentication device, and the second request information carries second feature information of the N objects; and receiving an authentication result of the N objects fed back by the authentication device, wherein the authentication result is obtained by the authentication device according to a matching result of the received first feature information and second feature information of the N objects with first feature data and second feature data corresponding to the first feature data pre-stored locally.

## Description

### Cross-Reference to Related Application

The present disclosure is based on and claims the benefit of priority of Chinese Patent Application No. CN2024101657353 filed on 05 February 2024, and entitled "Method for Object Authentication", the disclosure of which is incorporated herein by reference in its entirety.

### Technical Field

Embodiments of the present disclosure relate to the field of communication technologies, and in particular, to a method for object authentication.

### Background

With the rapid development of Artificial Intelligence (AI) technology, cases of using AI face-swapping and voice-swapping to carry out financial risk activities occur frequently.

To prevent the occurrence of the above cases, analysis and recognition are usually performed on videos, for example, recognizing and analyzing whether the user's blinking is natural, whether the sound and lip movements are synchronized during a call, and whether the video image is distorted. When it comes to activities involving important financial matters, users are also required to conduct offline face-to-face authentication or telephone authentication.

The above recognition methods require the user terminal to have high-performance processing components and a high-precision recognition algorithm, and with the development and progress of AI technology, existing recognition algorithms will gradually become ineffective.

For the problem in the related art that the technologies for recognizing AI face-swapping and voice-swapping are too complex, no simple and effective technical solution has yet been proposed.

### Summary

Embodiments of the present disclosure provide a method for object authentication.

According to an embodiment of the present disclosure, there is provided a method for object authentication, applied to a first terminal, the method including: sending, to an authentication device, first request information for authenticating N objects in a video, wherein the first request information carries first feature information of the N objects, N≥1; sending an authentication instruction to terminals where the N objects are located, wherein the authentication instruction is used for instructing the terminals to send second request information to the authentication device, and the second request information carries second feature information of the N objects; and receiving an authentication result of the N objects fed back by the authentication device, wherein the authentication result is obtained by the authentication device according to a matching result of the received first feature information and second feature information of the N objects with first feature data and second feature data corresponding to the first feature data pre-stored locally.

According to an embodiment of the present disclosure, there is provided a method for object authentication, applied to a second terminal, the method including: receiving an authentication instruction sent by a first terminal after the first terminal sends, to an authentication device, first request information for authenticating N objects in a video, wherein the first request information carries first feature information of the N objects, N≥1; and sending second request information to the authentication device according to the authentication instruction, so that the authentication device obtains an authentication result of the N objects, wherein the second terminal is a terminal where the N objects are located, the second request information carries second feature information of the N objects, and the authentication result is obtained by the authentication device according to a matching result of the first feature information and the second feature information with first feature data and second feature data corresponding to the first feature data pre-stored locally.

According to another embodiment of the present disclosure, there is also provided a method for object authentication, applied to an authentication device, the method including: receiving first request information sent by a first terminal for authenticating N objects in a video, wherein the first request information carries first feature information of the N objects, N≥1; receiving second request information sent by terminals where the N objects are located, wherein the second request information carries second feature information of the N objects, and the second request information is sent by the terminals where the N objects are located after receiving an authentication instruction sent by the first terminal; obtaining an authentication result of the N objects according to a matching result of the first feature information and the second feature information of the N objects with first feature data and second feature data corresponding to the first feature data pre-stored locally; and feeding back the authentication result of the N objects to the first terminal.

According to yet another embodiment of the present disclosure, there is also provided a computer-readable storage medium, the storage medium having a computer program stored therein, wherein the computer program is configured to, when running, execute steps of the method according to any one of the above method embodiments.

According to yet another embodiment of the present disclosure, there is also provided an electronic device, including a memory and a processor, wherein the memory stores a computer program, and the processor is configured to run the computer program to execute steps of the method according to any one of the above method embodiments.

### Brief Description of the Drawings

FIG. 1 is a hardware structural block diagram of a computer device of a method for object authentication according to the embodiments of the present disclosure;
FIG. 2 is a first flowchart of a method for object authentication according to the embodiments of the present disclosure;
FIG. 3 is a first schematic diagram of requesting authentication of a method for object authentication according to the embodiments of the present disclosure;
FIG. 4 is a schematic diagram of pre-storing feature data of a method for object authentication according to the embodiments of the present disclosure;
FIG. 5 is a first call interface diagram for performing identity authentication on multiple persons of a method for object authentication according to the embodiments of the present disclosure;
FIG. 6 is a specific flowchart of a method for object authentication according to the embodiments of the present disclosure;
FIG. 7 is an information interaction diagram of requesting authentication of a method for object authentication according to the embodiments of the present disclosure;
FIG. 8 is a second schematic diagram of requesting authentication of a method for object authentication according to the embodiments of the present disclosure;
FIG. 9 is a first call interface diagram for performing identity authentication of a method for object authentication according to the embodiments of the present disclosure;
FIG. 10 is a third schematic diagram of requesting authentication of a method for object authentication according to the embodiments of the present disclosure;
FIG. 11 is a fourth schematic diagram of requesting authentication of a method for object authentication according to the embodiments of the present disclosure;
FIG. 12 is a second call interface diagram for performing identity authentication on multiple persons of a method for object authentication according to the embodiments of the present disclosure;
FIG. 13 is a third call interface diagram for performing identity authentication on multiple persons of a method for object authentication according to the embodiments of the present disclosure;
FIG. 14 is a second flowchart of a method for object authentication according to the embodiments of the present disclosure;
FIG. 15 is a fourth call interface diagram for performing identity authentication on multiple persons of a method for object authentication according to the embodiments of the present disclosure;
FIG. 16 is a third flowchart of a method for object authentication according to the embodiments of the present disclosure;
FIG. 17 is a second call interface diagram for performing identity authentication of a method for object authentication according to the embodiments of the present disclosure;
FIG. 18 is a fifth schematic diagram of requesting authentication of a method for object authentication according to the embodiments of the present disclosure;
FIG. 19 is a schematic structural diagram of a terminal device of a method for object authentication according to the embodiments of the present disclosure;
FIG. 20 is a schematic structural diagram of an authentication server device of a method for object authentication according to the embodiments of the present disclosure.

### Detailed Description of the Embodiments

Implementations of the present disclosure will be described in detail below with reference to the accompanying drawings and in conjunction with the embodiments.

It should be noted that the terms "first", "second", etc. in the specification and claims of the present disclosure and the above drawings are used to distinguish similar objects, and are not necessarily used to describe a specific order or sequence.

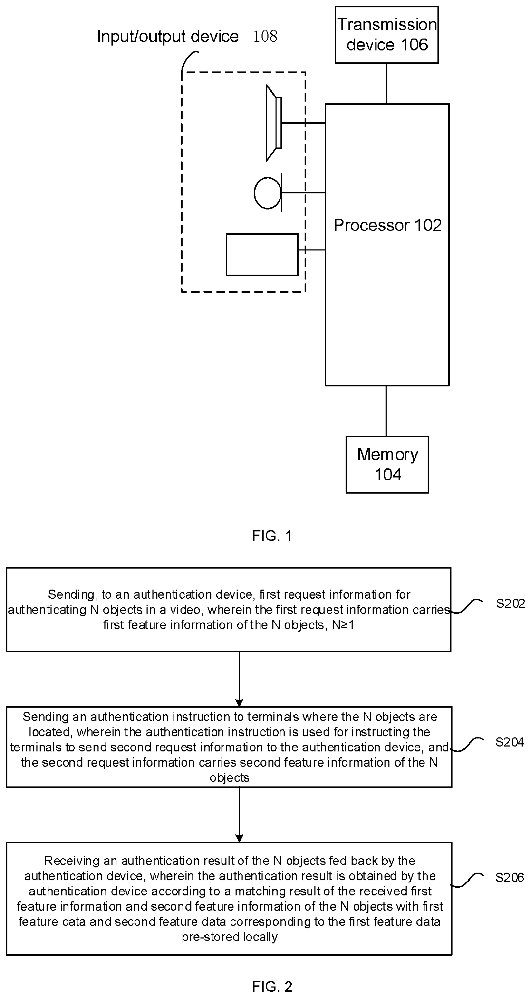

The method embodiments provided in the embodiments of the present disclosure may be executed in a computer device or a similar computing apparatus. Taking execution on a computer device as an example, FIG. 1 is a hardware structural block diagram of a computer device of a method for object authentication according to the embodiments of the present disclosure. As shown in FIG. 1, the computer device may include one or more (only one is shown in FIG. 1) processors 102 (the processors 102 may include, but are not limited to, processing devices such as a microprocessor MCU or a programmable logic device) and a memory 104 configured to store data, wherein the computer device may further include a transmission device 106 configured for communication functions and an input/output device 108. Those of ordinary skill in the art can understand that the structure shown in FIG. 1 is only illustrative, and does not limit the structure of the computer device. For example, the computer device may also include more or fewer components than those shown in FIG. 1, or have a configuration different from that shown in FIG. 1.

The memory 104 may be configured to store a computer program, for example, software programs and modules of application software, such as a computer program corresponding to the object authentication method in the embodiments of the present disclosure. The processor 102 executes the computer program stored in the memory 104, thereby executing various functional applications and board matching, i.e., implementing the above method. The memory 104 may include high-speed random access memory, and may also include non-volatile memory, such as one or more magnetic storage devices, flash memory, or other non-volatile solid-state memory. In some examples, the memory 104 may further include memory remotely disposed relative to the processor 102, and these remote memories may be connected to the computer device through a network. Examples of the above network include, but are not limited to, the Internet, an intranet, a local area network, a mobile communication network, and combinations thereof.

The transmission device 106 is configured to receive or send data via a network. Specific examples of the above network may include a wireless network provided by a communication provider of the computer device. In one example, the transmission device 106 includes a Network Interface Controller (NIC), which can be connected to other network devices through a base station so as to communicate with the Internet. In one example, the transmission device 106 may be a Radio Frequency (RF) module, which is configured to communicate with the Internet in a wireless manner.

In the present embodiment, there is provided an object authentication method running on the above computer device. FIG. 2 is a first flowchart of a method for object authentication according to the embodiments of the present disclosure. As shown in FIG. 2, the method is applied to a first terminal, and includes the following steps.

Step S202: sending, to an authentication device, first request information for authenticating N objects in a video, wherein the first request information carries first feature information of the N objects, N≥1.

The video scenario in the present embodiment may be a video call scenario or a video conference scenario.

The authentication device may be a server or a user terminal. In general, when the number of authentications is relatively large, the authentication device may be a server; when the number of authentications is relatively small, the authentication device may be a user terminal. For example, for authentication of users within a small range, such as members of the same family, members of the same project team, or members of the same dormitory, the amount of authentication data is small, and the number of authentications is small, so a user terminal can be used to replace the functions of the server.

The first feature information includes at least one of the following: facial feature information and voiceprint feature information. The first feature information may also include iris information, user account information, and mobile phone number signal. The first feature information is information acquired by the first terminal through video data for determining identities of the N objects. Any information that can be acquired from the video and can uniquely determine the identities of the objects can be used as the first feature information.

In the present embodiment, before the above step S202, the method further includes: presenting, on an interface of the video, an indication that the N objects are not authenticated; wherein presenting, on the interface of the video, the indication that the N objects are not authenticated includes: presenting, on the interface of the video, the indication that the N objects are not authenticated in response to at least one of the following situations: in response to detecting that audio of the video includes a preset keyword, in response to an abnormal scene in the video interface, in response to an AI generation warning in an image in the video interface, and in response to a virtual background in an image in the video.

Wherein presenting the indication that the N objects are not authenticated on the interface of the video may include at least one of: flashing a preset text on a call interface, generating vibration, giving a voice prompt, and giving a short message reminder. The preset text may be displayed in the avatar of the object in the call interface, or may be displayed above the avatar of the object, and the user may drag the preset text to a suitable position. The preset text is used to remind the user that the N objects are not authenticated, and the preset text may include "face not authenticated".

The preset keyword is predefined by the user and is used to determine whether to initiate authentication of objects in the video. Specifically, the keyword may include: "money", "transfer", "risk", or names of relatives, project names, etc. In the present embodiment, the first terminal may include an "object authentication detection and reminder" function, which determines, according to rules predefined by the user, whether to perform the object authentication detection and reminder step.

In the present embodiment, the above step S202 may specifically include: acquiring a first touch operation instruction for authenticating the N objects, and in response to the first touch operation instruction, sending, to the authentication device, the first request information for authenticating the N objects.

Specifically, a user of the first terminal triggers a button for authenticating the N objects on a display interface, generates a first trigger instruction according to the trigger operation, acquires and responds to the first trigger instruction, and sends the first request information for authenticating the N objects to the authentication device. The button displayed on the display interface may be a "request authentication" button. The user of the first terminal clicks the button when authentication of the objects is required, for example, when it is detected that audio of the video triggers a preset keyword, when the display interface presents the text indicating that the objects are not authenticated, or when the current video involves important matters (such as money, decisions, and instructions).

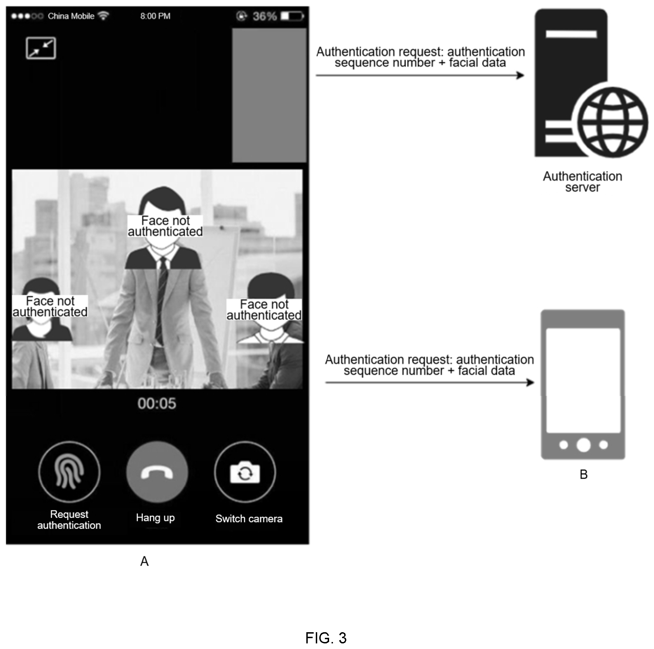

FIG. 3 is a first schematic diagram of requesting authentication of a method for object authentication according to the embodiments of the present disclosure. As shown in FIG. 3, when A wants to authenticate a certain face, A clicks on the touch display screen area where the face is located on the call interface. A's mobile phone extracts, according to the coordinates of the touch display screen area clicked by A, facial data within an area range containing the coordinates from the video call data. Then A clicks the "request authentication" button. Both the authentication request initiated by A to the server and the authentication request initiated by A to B carry an authentication sequence number and the facial data, indicating which face is to be subjected to identity authentication.

In the present embodiment, before acquiring the first touch operation instruction for authenticating the N objects, the method further includes: repeatedly performing the following operations until extraction of the first feature information of the N objects is completed: acquiring a second touch operation instruction for selecting a current object, and in response to the second touch operation instruction, extracting the first feature information of the current object. Extracting the first feature information of the current object includes: acquiring position information of the second touch operation instruction on a display screen; and extracting the first feature information of the current object in the video corresponding to the position information.

Specifically, a user of the first terminal triggers a button for selecting a current object from the N objects on a display interface, generates a second touch operation instruction and responds to it, acquires position information of the second touch operation instruction on the display interface, and extracts the first feature information of the current object in the video corresponding to the position information. The above operations are repeated until extraction of the first feature information of the N objects is completed.

In the present embodiment, before the above step S202, the method further includes: acquiring the first feature information of the N objects according to the video.

Acquiring the facial feature information of the N objects according to the video includes: extracting, locally according to the video, the first feature information of the N objects.

Specifically, extracting, locally according to the video, the first feature information of the N objects may include the following steps: 1, an image processing module in the first terminal performs face detection to detect N face images in the video; 2, facial feature extraction is performed on the N face images to obtain a feature representation of each face; wherein, before obtaining the feature representation of each face, each face is aligned, specifically, key point detection, such as nose tip and mouth corners, is performed on each face image to find key points of each face, and the key points of each face are aligned with preset key points; 3, clustering is performed on the obtained feature representations of the N faces to extract facial feature information of the N objects. Face detection, facial key point detection, facial feature extraction or face recognition belong to the field of computer vision and may be implemented using deep learning algorithms, and face clustering may be implemented using clustering algorithms of traditional machine learning.

Acquiring the facial feature information of the N objects according to the video may further include: sending the video to the authentication device, and receiving the first feature information of the N objects returned by the authentication device.

Specifically, in a case where the first terminal has insufficient capability for extracting the first feature information, the video is sent to the authentication device, and the authentication device extracts the first feature information. After the extraction is completed, the extracted first feature information is returned to the first terminal, which can solve the problem of object when the performance of the first terminal is relatively poor. For example, the first terminal is a feature phone, which has a camera but insufficient image processing capability to perform face recognition and feature extraction on faces in the video. In this case, the video can be uploaded to the server, and the server performs face recognition and feature extraction, and then returns the facial feature information to the first terminal.

In the present embodiment, before the above step S202, the method further includes: pre-storing the first feature data of the N objects and the second feature data corresponding to the first feature data in the authentication device.

The first feature data includes at least one of the following: facial feature data and voiceprint feature data. Any data that can uniquely determine the identity of an object can be used as the first feature data. The first feature information may also include iris data, user account data, and mobile phone number data.

The second feature data includes at least one of the following: fingerprint feature data and iris feature data. Any data that can uniquely determine the identity of an object can be used as the second feature data, wherein the second feature data is different from the first feature data. The second feature data may also include: palmprint feature data, facial feature data, voiceprint feature data, ID card data, seal data, electronic signature data, and device unique identification data associated with a user.

Specifically, the first terminal encrypts the first feature data and the second feature data of the N objects and uploads them to the authentication device, establishes a correspondence between the first feature data and the second feature data, and stores the first feature data, the second feature data and the correspondence in a database of the authentication device. The authentication device can find the second feature data through the first feature data according to the correspondence, and can also find the first feature data through the second feature data. In addition to the first terminal encrypting and uploading the first feature data and the second feature data of the N objects to the authentication device, other trusted devices may also perform the uploading, such as the second terminals where the N objects are located, or each terminal where each object is located may separately transmit the first feature data and the second feature data corresponding to each object. There may be multiple pieces of first feature data, and there may also be multiple pieces of second feature data. Through one of the multiple pieces of first feature data, the second feature data can be found, and the same applies to the second feature data.

The authentication device may be a server or a user equipment.

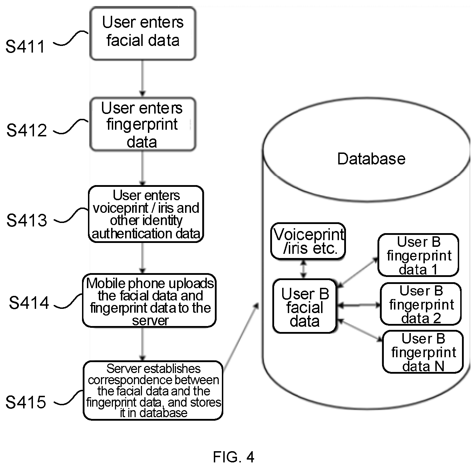

In a case where the authentication device is a server, FIG. 4 is a schematic diagram of pre-storing feature data of a method for object authentication according to the embodiments of the present disclosure. As shown in FIG. 4, the specific process is as follows:
Step S411, a user enters facial data;
Step S412, the user enters fingerprint data;
Step S413, the user enters voiceprint/iris and other identity authentication data;
Step S414, the mobile phone uploads the facial data and fingerprint data to the server;
Step S415, the server establishes a correspondence between the facial data and the fingerprint data, and stores it in a database.

Taking one object B of the N objects as an example, before authenticating B, B enters facial data, fingerprint data and/or voiceprint, iris and other data that can be used for user identity identification into B's mobile phone. B's mobile phone encrypts the user identity identification data such as facial data and fingerprint data and uploads them to a trusted authentication server, such as a server of an operator or an Internet manufacturer. The server establishes a correspondence between the facial data and fingerprint data and other identity identification data and stores them in a database. Specifically, a mapping table is established between the facial data, fingerprint data and other identity identification data and stored in the database. There may be multiple pieces of fingerprint data, such as fingerprint data of the right thumb and fingerprint data of the right index finger. Through B's facial data, the corresponding fingerprint data and other identity identification data can be found, and through any piece of fingerprint data or other identity identification data, the corresponding facial data can be found.

In a case where the authentication device is a user terminal, taking four objects A, B, C and D as an example, A, B, C and D all enter facial information and fingerprint information and other identity identification information on their respective mobile phones. This information, along with a mapping table between the information, is stored locally on the mobile phones. For example, A, B, C and D all enter facial information and fingerprint information and other identity identification information on A's mobile phone, and this information, along with the mapping table between the information, is stored on A's mobile phone; A, B, C and D all enter facial information and fingerprint information and other identity identification information on B's mobile phone, and this information, along with the mapping table between the information, is stored on B's mobile phone, and so on, until all members have entered the identity identification information on everyone's mobile phones and stored it locally on the mobile phones.

Step S204: sending an authentication instruction to terminals where the N objects are located, wherein the authentication instruction is used for instructing the terminals to send second request information to the authentication device, and the second request information carries second feature information of the N objects.

The terminals where the N objects are located include: when N=1, the terminal where the N objects are located is the same terminal; when N>1 and in a video call scenario, the terminal where the N objects are located is the same terminal; when N>1 and in a video conference scenario, the terminals where the N objects are located are multiple terminals, which may be the respective terminals of the N objects.

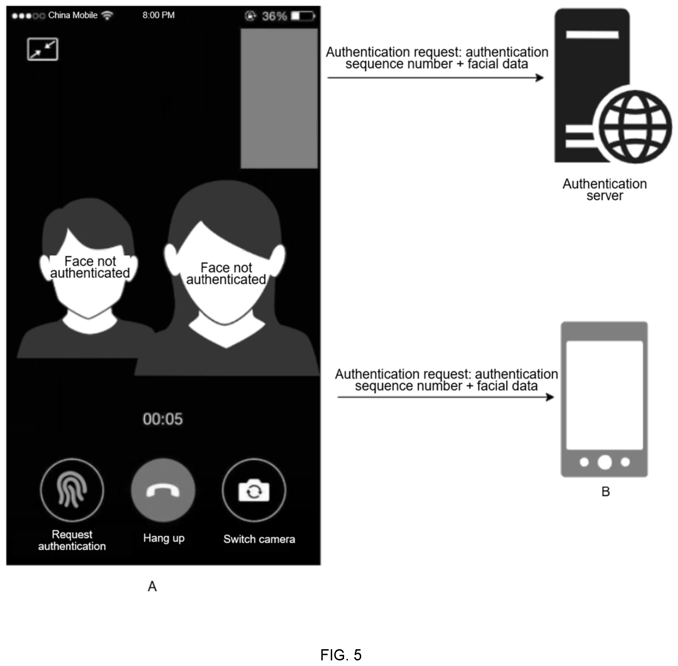

For example, N=1, A and B conduct a video call, A's terminal is the first terminal, B's terminal is the second terminal, and there is only B as an object in the video besides A, and the terminal where the N objects are located is the second terminal. In the case of N=2 and in a video call scenario, there are two objects B and C in the video, and both B and C are in the second terminal; in the case of N=2 and in a video conference scenario, B is in the second terminal, and C is in another terminal other than the first terminal and the second terminal, that is, the two objects B and C are in two terminals. Hereinafter, the video call scenario with N>1 is referred to as a "multi-face scenario", and the video conference scenario with N> is referred to as a "multi-user scenario". FIG. 5 is a first call interface diagram for performing identity authentication on multiple persons of a method for object authentication according to the embodiments of the present disclosure. As shown in FIG. 5, the video call interface further includes faces other than B. For example, B and C are together, and A's call interface displays the faces of both B and C.

The second feature information includes at least one of the following: fingerprint feature information and iris feature information. The second feature information may also include at least one of the following: palmprint feature information, facial feature information, voiceprint feature information, ID card information, seal information, electronic signature information, and device unique identification information associated with a user. Any information that can uniquely determine the identity of an object can be used as the second feature information of the object.

The authentication instruction is further used for instructing the N terminals to acquire the second feature information of the N objects and to send the second request information to the authentication device. Specifically, after receiving the instruction, the N terminals call an acquisition device to acquire the second feature information through interactive operations on a display interface, and then send the second request information carrying the second feature information to the authentication device.

Step S206: receiving an authentication result of the N objects fed back by the authentication device, wherein the authentication result is obtained by the authentication device according to a matching result of the received first feature information and second feature information of the N objects with first feature data and second feature data corresponding to the first feature data pre-stored locally.

Through the above steps S202 to S206, the first terminal provides the first feature information, the second terminal where the objects are located provides the second feature information, and the authentication device obtains the authentication result according to the first feature information and the second feature information, thereby solving the problem in the related art that the technologies for recognizing AI face-swapping and voice-swapping are too complex, and making object recognition more convenient and reliable.

In an embodiment, the method further includes: in response to not receiving, within a predetermined time, the authentication result of a target object of the N objects fed back by the authentication device, determining that authentication of the target object fails, wherein the target object is one or more objects of the N objects.

Specifically, when acquiring the first touch operation instruction for authenticating the N objects, a timeout timer is started. In response to not receiving, after the timeout timer expires, the authentication result of the target object of the N objects fed back by the authentication device, it is determined that authentication of the target object fails.

In an embodiment, after the above step S204, the method further includes: receiving rejection authentication instruction information fed back by a terminal where a target object of the N objects is located, wherein the target object is one or more objects of the N objects; and determining, according to the rejection authentication instruction information, that authentication of the target object fails.

After the terminal where the target object of the N objects is located receives the authentication instruction from the first terminal, the target object may choose to execute the instruction through an interactive interface, or may choose to refuse to execute the instruction. After the target object chooses to refuse to execute the instruction, the terminal where the target object is located feeds back a rejection instruction, and the failure of authentication of the target object is determined through the rejection instruction.

In an embodiment, the method further includes: presenting, on an interface of the video, an indication that the N objects are authenticated or authentication fails according to the authentication result.

In an embodiment, in a case where N=1, the above step S206 includes:
the first request information carrying an authentication sequence number associated with the first terminal;
the authentication instruction carrying the authentication sequence number, and the second request information carrying the authentication sequence number; and
receiving the authentication result of the N objects fed back by the authentication device according to the authentication sequence number, wherein the authentication result is obtained by the authentication device according to a matching result of the first feature information corresponding to the authentication sequence number and the second feature information corresponding to the authentication sequence number with first feature data and second feature data corresponding to the first feature data pre-stored locally.

The authentication sequence number is a unique identifier composed of numbers, characters, etc. The authentication sequence number may be composed of the current Universal Time Coordinated (UTC) and/or an International Mobile Equipment Identity (IMEI). For example, if the current UTC time is 2023-11-03 08:00:00, and the IMEI number of the first terminal is 125739485642710, then the authentication sequence number is 20231103080000125739485642710.

In the embodiments of the present disclosure, by sending, to an authentication device, first request information for authenticating N objects in a video, wherein the first request information carries first feature information of the N objects, N≥1; sending an authentication instruction to terminals where the N objects are located, wherein the authentication instruction is used for instructing the terminals to send second request information to the authentication device, and the second request information carries second feature information of the N objects; and receiving an authentication result of the N objects fed back by the authentication device, wherein the authentication result is obtained by the authentication device according to a matching result of the received first feature information and second feature information of the N objects with first feature data and second feature data corresponding to the first feature data pre-stored locally, the problem in the related art that the technologies for recognizing AI face-swapping and voice-swapping are too complex is solved, making object recognition more convenient and reliable.

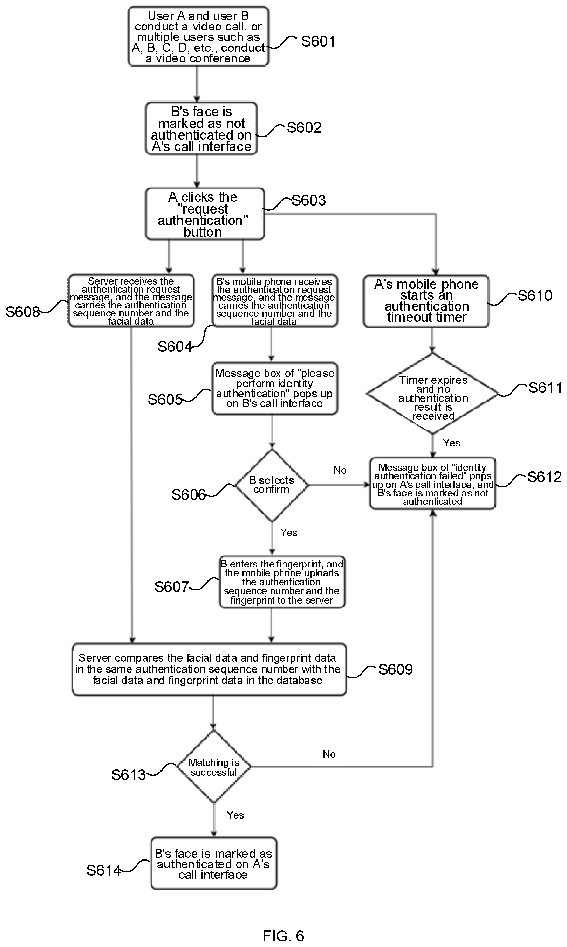

FIG. 6 is a specific flowchart of a method for object authentication according to the embodiments of the present disclosure. As shown in FIG. 6, the flow includes the following steps.

Step S601, user A and user B conduct a video call, or multiple users such as A, B, C, D, etc., conduct a video conference.

Wherein, A's terminal is the first terminal, B's terminal is the second terminal, and the authentication device is an authentication server; in a multi-face scenario, for example, B and C are together, and in addition to A and B, the video may also include multiple persons such as C and D. The authentication process for C and D is basically the same as the authentication process for B, and the process for authenticating B is described below as an example.

Step S602, B's face is marked as not authenticated on A's call interface.

Step S603, A clicks the "request authentication" button; steps S608, S604 and S610 are executed.

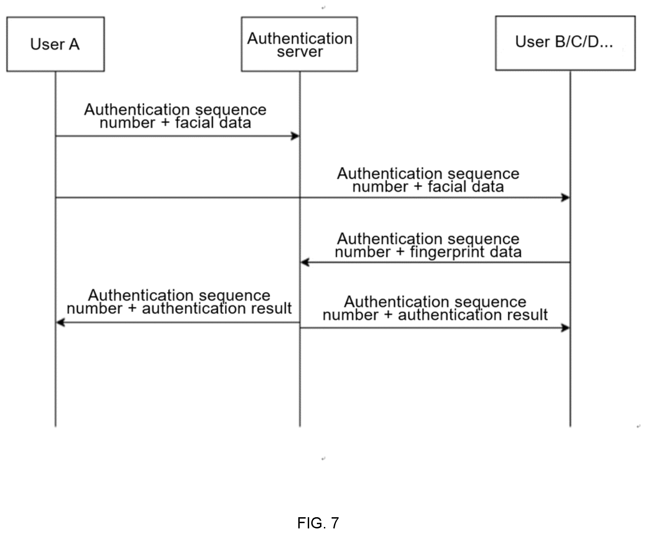

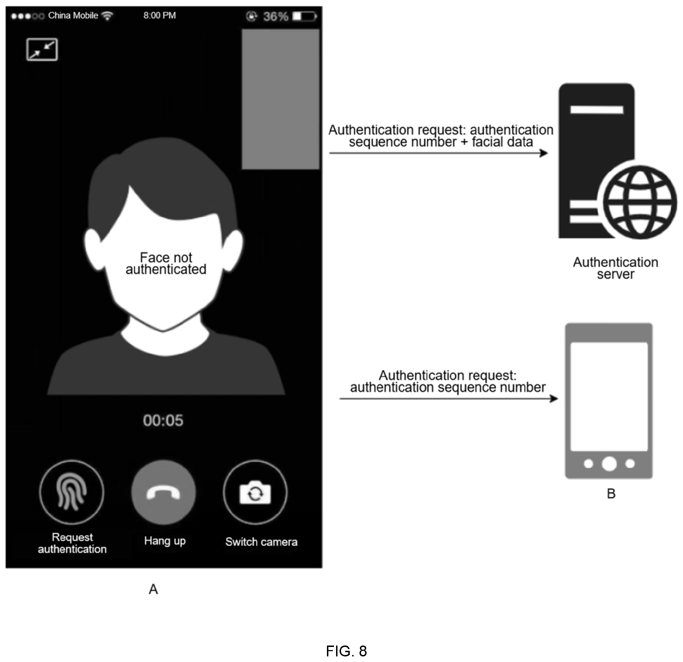

FIG. 7 is an information interaction diagram of requesting authentication of a method for object authentication according to the embodiments of the present disclosure. As shown in FIG. 7, the main bodies of information interaction include A, the authentication server, and B, and B may also be multiple such as including B, C, D, etc. FIG. 8 is a second schematic diagram of requesting authentication of a method for object authentication according to the embodiments of the present disclosure. As shown in FIG. 8, after clicking the "request authentication" button, A's mobile phone initiates authentication requests to the server and to B. The authentication request initiated to the server includes the authentication sequence number and B's facial data, indicating that A requests authentication of that face. The authentication request initiated to B includes the authentication sequence number.

Step S604, B's mobile phone receives the authentication request message, and the message carries the authentication sequence number and the facial data.

Step S605, a message box of "please perform identity authentication" pops up on B's call interface.

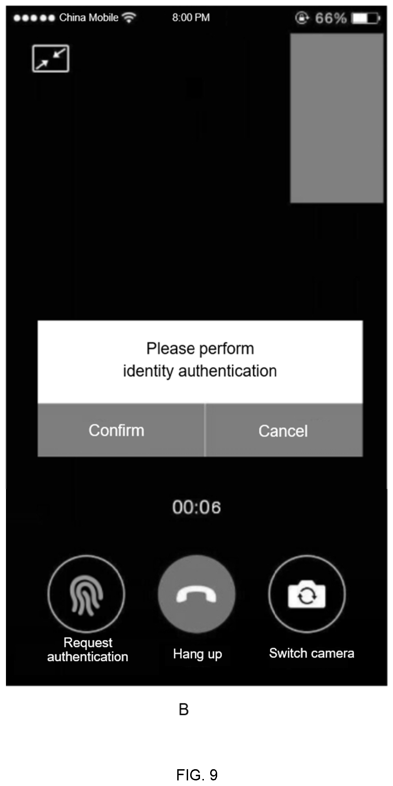

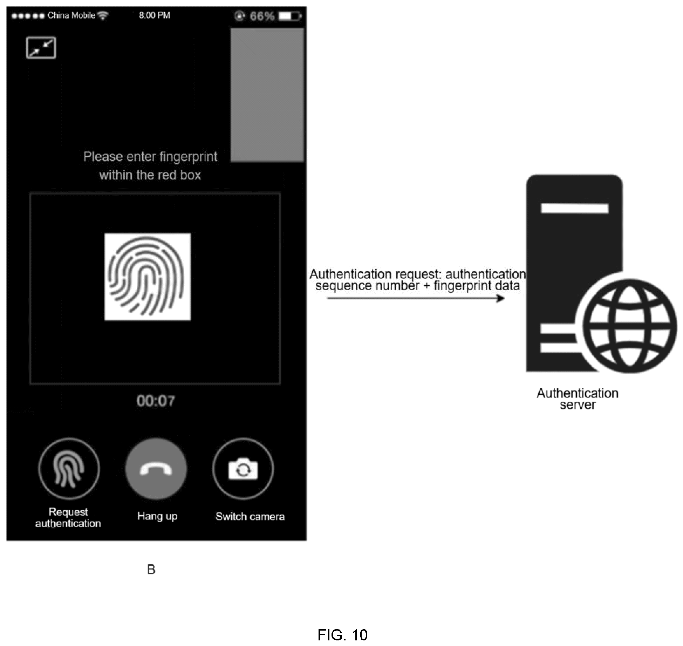

FIG. 9 is a first call interface diagram for performing identity authentication of a method for object authentication according to the embodiments of the present disclosure. As shown in FIG. 9, B's mobile phone receives the authentication request message, and a message box of "please perform identity authentication" pops up on the call interface, the message box including confirm and cancel buttons. FIG. 10 is a third schematic diagram of requesting authentication of a method for object authentication according to the embodiments of the present disclosure. As shown in FIG. 10, after the message box pops up, B selects "confirm", and then enters the fingerprint. B's mobile phone uploads the fingerprint and the authentication sequence number to the authentication server for authentication. The authentication sequence number here is the authentication sequence number in the authentication request previously sent by A to B. If B selects "cancel", B's mobile phone sends a message of rejecting authentication to A's mobile phone, and authentication failure is directly displayed on A's mobile phone.

Step S606, B selects confirm; if yes, execute step S607; if no, execute S612.

Step S607, B enters the fingerprint, and the mobile phone uploads the authentication sequence number and the fingerprint to the server.

Step S608, the server receives the authentication request message, and the message carries the authentication sequence number and the facial data.

Step S609, the server compares the facial data and fingerprint data in the same authentication sequence number with the facial data and fingerprint data in the database, and obtains an authentication result.

Step S610, A's mobile phone starts an authentication timeout timer.

Step S611, the timer expires and no authentication result is received; if yes, execute step S612.

Step S612, a message box of "identity authentication failed" pops up on A's call interface, and B's face is marked as not authenticated.

Step S613, determining whether the matching is successful; if yes, execute step S614; if no, execute step S612.

Step S614, B's face is marked as authenticated on A's call interface.

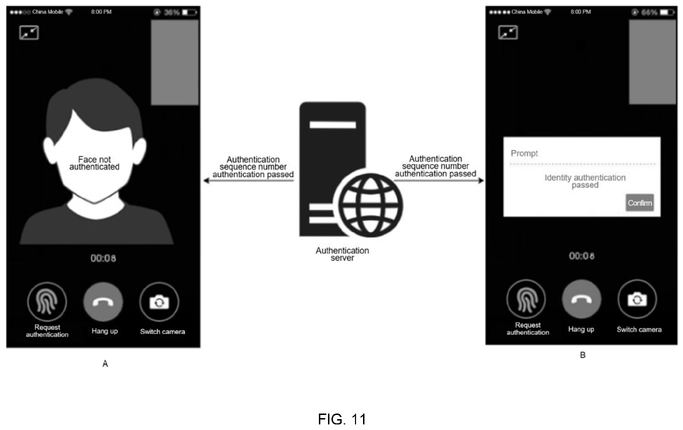

FIG. 11 is a fourth schematic diagram of requesting authentication of a method for object authentication according to the embodiments of the present disclosure. As shown in FIG. 11, A's mobile phone receives the message of the authentication result fed back by the server. If the authentication result is authentication passed, B's face is marked as authenticated on A's call interface, indicating that the other party's face has not been subjected to AI face-swapping and the identity is authentic. The text "face authenticated" may disappear after being displayed for a while, and need not be displayed all the time. If the authentication result is authentication failure, a message box of "identity authentication failed" pops up on A's call interface, and B's face is still marked as "not authenticated". B's mobile phone receives the message of the authentication result. If the authentication result is authentication passed, a prompt box of "identity authentication passed" pops up; otherwise, a prompt box of "identity authentication failed" pops up.

In an embodiment, in the case where N>1, the above step S206 includes:
the first request information carrying N authentication sequence numbers corresponding to the N objects and associated with the first terminal, wherein one object corresponds to one authentication sequence number;
the authentication instruction carrying the authentication sequence number corresponding to the object, and the second request information carrying the authentication sequence number; and
receiving the authentication result of the N objects fed back by the authentication device according to the authentication sequence numbers, wherein the authentication result carries the authentication sequence numbers of the N objects, and identifying the authentication result of the N objects according to the authentication sequence numbers of the N objects, wherein the authentication result is obtained by the authentication device determining the first feature information and the second feature information of the N objects according to the N authentication sequence numbers, and then obtaining the authentication result according to a matching result of the first feature information and the second feature information with first feature data and second feature data corresponding to the first feature data pre-stored locally.

The authentication sequence number is a unique identifier composed of numbers, characters, etc. The authentication sequence number may be composed of the current Universal Time Coordinated (UTC) and/or an International Mobile Equipment Identity (IMEI).

The first request information may include one authentication request, and the one authentication request includes N authentication sequence numbers, or may include N authentication requests, each authentication request including one authentication sequence number.

In the case where the first request information includes one authentication request, sending, to the authentication device, the first request information for authenticating the N objects in the video may include: repeatedly performing the following operations until N authentication sequence numbers corresponding to the N objects and associated with the first terminal are generated: acquiring a third touch operation instruction for selecting a current object, and in response to the third touch operation instruction, extracting the first feature information of the current object, and generating an authentication sequence number corresponding to the current object and associated with the first terminal.

Wherein, sending, to the authentication device, the first request information for authenticating the N objects in the video further includes: acquiring a fifth touch operation instruction for requesting authentication, and in response to the fifth touch operation instruction, sending, to the authentication device, the first request information for authenticating the N objects in the video.

Wherein, after the first terminal acquires the first feature information of each object, it generates one authentication sequence number, and after acquiring the first feature information of the N objects, it generates one authentication request.

In the case where the first request information includes multiple authentication requests, sending, to the authentication device, the first request information for authenticating the N objects in the video may include:
repeatedly performing the following operations until N pieces of authentication request information corresponding to the N objects are generated:
acquiring a third touch operation instruction for selecting a current object, and in response to the third touch operation instruction, extracting the first feature information of the current object, and generating an authentication sequence number corresponding to the current object; acquiring a fifth touch operation instruction for requesting authentication of the current object, and in response to the fifth touch operation instruction, sending, to the authentication device, authentication request information for authenticating the current object in the video.

Wherein, after the first terminal acquires the first feature information of the current object, it generates one authentication sequence number, and then generates one authentication request for the current object, until N pieces of authentication request information for the N objects are generated.

A user clicks, on the call interface, on the objects that need to be authenticated in sequence. The first terminal extracts, according to the position information of the display screen clicked by the user, the facial data of the current object in the video corresponding to the position information. Then the user clicks the "request authentication" button, and the first terminal generates one authentication request for the current object. The above operations are repeated until N authentication requests for the N objects are generated. Each authentication request has a different authentication sequence number, and the authentication process for each object is identified by a unique authentication sequence number, so that the authentication requests and authentication results correspond one-to-one. In this method, authentication requests for multiple users are initiated in a single operation, but the actual authentication process is still performed separately for each user.

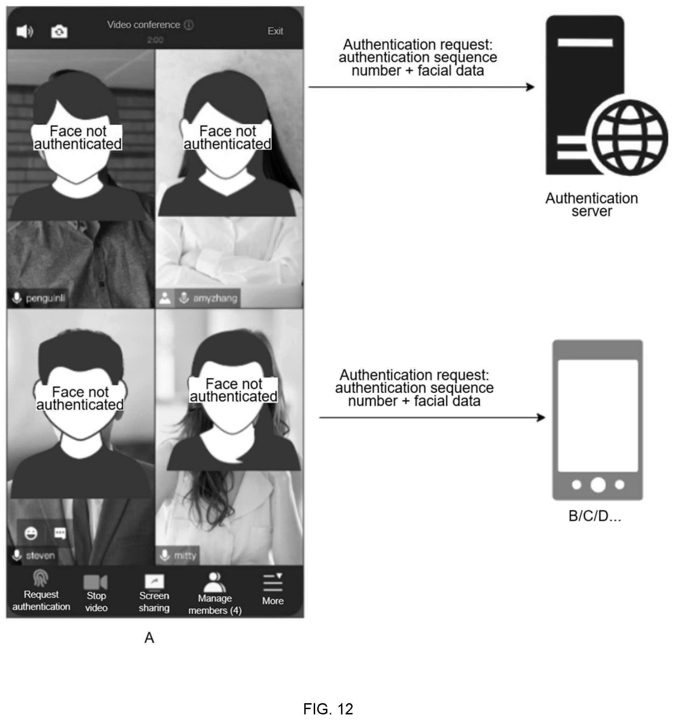

FIG. 12 is a second call interface diagram for performing identity authentication on multiple persons of a method for object authentication according to the embodiments of the present disclosure. As shown in FIG. 12, multiple users such as A, B, C, D, etc., establish a video conference. A may select any user for identity authentication. For example, if A wants to authenticate a certain user, A clicks on the touch display screen area where the user is located on the call interface. A's mobile phone extracts, according to the coordinates of the touch display screen area clicked by A, the facial data of the user corresponding to the coordinates from the video conference data. Then A clicks the "request authentication" button, and the authentication request is sent to the server and the user. The authentication request includes the authentication sequence number and the facial data of the user, indicating which user is to be subjected to identity authentication. Then the user enters the fingerprint on the mobile phone and sends the authentication sequence number and the fingerprint to the server for authentication. The authentication process is the same as the above process of A authenticating B.

In another embodiment, in the case where N>1, the above step S206 further includes:
the first request information carrying an authentication sequence number associated with the first terminal, and numbers corresponding to the N objects, wherein one object corresponds to one number;
the authentication instruction carrying the authentication sequence number and the numbers corresponding to the N objects, and the second request information carrying the authentication sequence number and the numbers of the N objects; and
receiving the authentication result of the N objects fed back by the authentication device according to the authentication sequence number, wherein the authentication result of the N objects carries the numbers of the N objects, and identifying the authentication result of the N objects according to the numbers of the N objects, wherein the authentication result is obtained by the authentication device determining the first feature information and the second feature information of the N objects according to the received authentication sequence number and the numbers of the N objects, and then obtaining the authentication result according to a matching result of the first feature information and the second feature information with first feature data and second feature data corresponding to the first feature data pre-stored locally.

The number is a unique identifier composed of numbers, characters, etc.

The first request information may include one authentication request, and the one authentication request includes N numbers, or may include N authentication requests, each authentication request including one number.

Wherein, sending, to the authentication device, the first request information for authenticating the N objects in the video includes:
generating the authentication sequence number associated with the first terminal; and
repeatedly performing the following operations until numbers corresponding to the N objects are generated:
   acquiring a fourth touch operation instruction for selecting a current object, and in response to the fourth touch operation instruction, extracting the first feature information of the current object, and generating a number corresponding to the current object.

Wherein, sending, to the authentication device, the first request information for authenticating the N objects in the video further includes:
acquiring a fifth touch operation instruction for requesting authentication, and in response to the fifth touch operation instruction, sending, to the authentication device, the first request information for authenticating the N objects in the video.

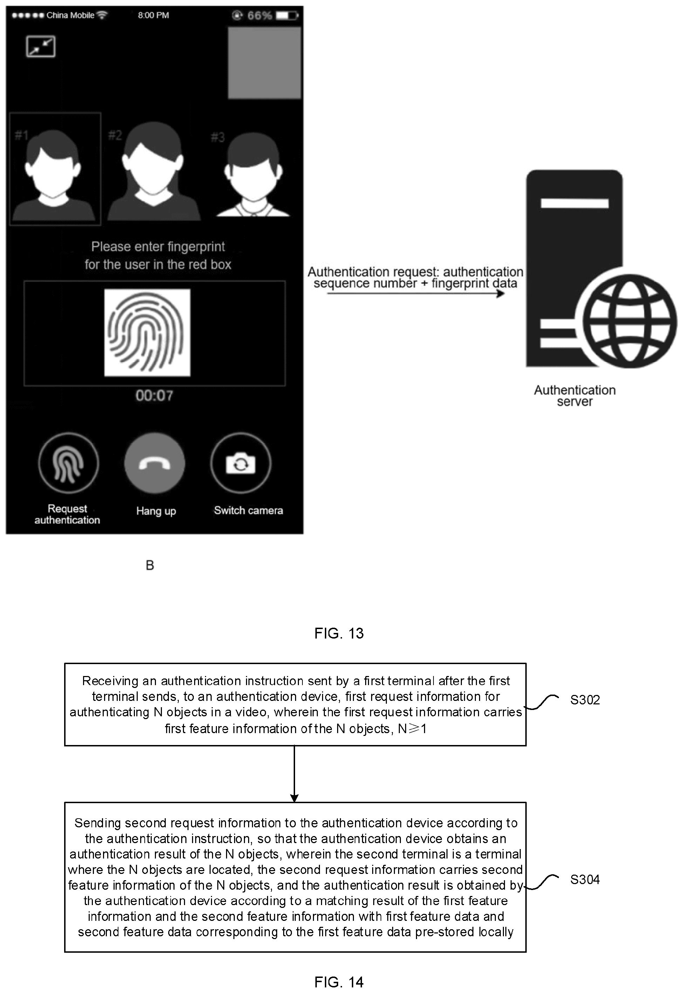

FIG. 13 is a third call interface diagram for performing identity authentication on multiple persons of a method for object authentication according to the embodiments of the present disclosure. As shown in FIG. 13, since A's mobile phone generates only one authentication request, the facial data of each user carried in the authentication request is identified by different numbers, and the numbers are used to distinguish the authentication result of each user. On B's mobile phone interface, the facial data of each user is identified by different numbers. After the user enters the fingerprint, the mobile phone assigns the same number to the fingerprint. The server takes the facial data and fingerprint data with the same number for matching authentication, and assigns the same number to the authentication result. Through the number, the authentication result of the user with that number can be found.

FIG. 14 is a second flowchart of a method for object authentication according to the embodiments of the present disclosure. As shown in FIG. 14, the method is applied to a second terminal, and includes the following steps.

Step S302: receiving an authentication instruction sent by a first terminal after the first terminal sends, to an authentication device, first request information for authenticating N objects in a video, wherein the first request information carries first feature information of the N objects, N≥1.

Step S304: sending second request information to the authentication device according to the authentication instruction, so that the authentication device obtains an authentication result of the N objects, wherein the second terminal is a terminal where the N objects are located, the second request information carries second feature information of the N objects, and the authentication result is obtained by the authentication device according to a matching result of the first feature information and the second feature information with first feature data and second feature data corresponding to the first feature data pre-stored locally.

Through the above steps S302 to S304, the problem in the related art that the technologies for recognizing AI face-swapping and voice-swapping are too complex can be solved, making object recognition more convenient and reliable.

In an embodiment, before the above step S304, the method further includes:
acquiring a first touch instruction for performing identity authentication on a current object, and in response to the first touch instruction, extracting the second feature information.

Wherein extracting the second feature information includes: acquiring a third touch instruction for selecting the current object from the N objects on a display screen interface, and in response to the third touch instruction, presenting, on the display screen interface, a prompt for entering the second feature information; acquiring a second touch instruction for entering the second feature information of the current object, and in response to the second touch instruction, extracting the second feature information of the current object.

In another embodiment, before the above step S304, the method further includes: extracting, according to the authentication instruction, the second feature information of the N objects in a predetermined order, and sending the second request information to the authentication device.

Wherein extracting, according to the authentication instruction, the second feature information of the N objects in a predetermined order includes: the authentication instruction carrying N authentication sequence numbers or N numbers corresponding to the N objects, wherein one object corresponds to one authentication sequence number or one number; and sequentially extracting, according to an order of the N authentication sequence numbers or the N numbers, the second feature information of a current object corresponding to a current authentication sequence number or a current number.

Wherein extracting the second feature information of the current object corresponding to the current authentication sequence number or the current number includes: presenting, on a display screen interface, a prompt for entering the second feature information of the current object corresponding to the current authentication sequence number or the current number; acquiring a fourth touch instruction for entering the second feature information of the current object, and in response to the fourth touch instruction, extracting the second feature information of the current object.

Specifically, the method flow includes: sequentially performing the following operations according to the order of the N authentication sequence numbers or the N numbers: presenting, on the display screen interface, a prompt for entering the second feature information of the current object corresponding to the current authentication sequence number or the current number; acquiring the fourth touch instruction for entering the second feature information of the current object, and in response to the fourth touch instruction, extracting the second feature information of the current object; and sending the second request information to the authentication device, wherein the authentication instruction carries the N authentication sequence numbers or the N numbers corresponding to the N objects, wherein one object corresponds to one authentication sequence number or one number.

Wherein, the method further includes: removing, from the display screen interface, the current authentication sequence number or the current number and the current object.

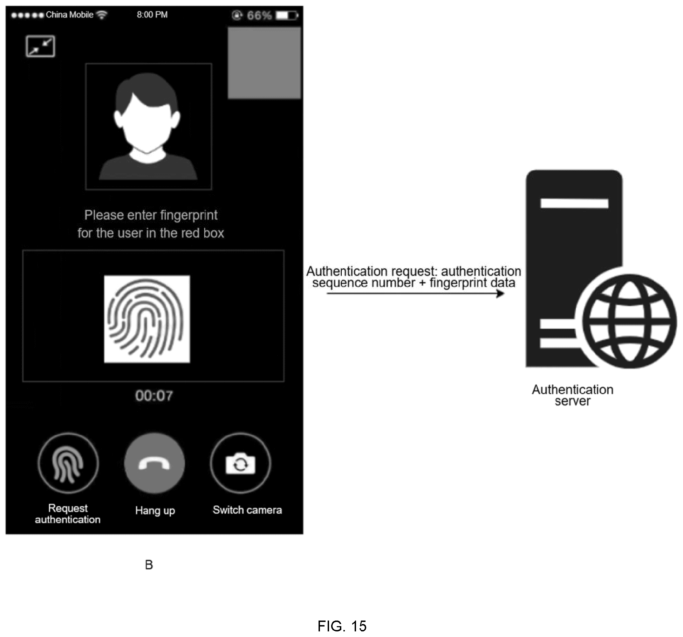

For a multi-face scenario, on B's mobile phone interface, each user's face image is displayed in sequence, and the face images are numbered. If the screen cannot display all the face images at one time, they can be displayed by sliding left or right. Each user enters the fingerprint in sequence according to the numbering order, and the mobile phone assigns the same number to the fingerprint. After a user enters the fingerprint, that user's face is no longer displayed, until all users have entered the fingerprints. Then B's mobile phone sends the authentication sequence number and the numbered fingerprint data to the server for authentication. The server performs matching verification on the facial data and fingerprint data with the same number, and assigns the same number to the authentication result. Through the number, the authentication result of the facial data with that number can be found. FIG. 15 is a fourth call interface diagram for performing identity authentication on multiple persons of a method for object authentication according to the embodiments of the present disclosure. As shown in FIG. 15, on B's mobile phone, the facial data is displayed on the screen in the form of a face avatar, indicating that A wants to perform identity authentication on the user corresponding to the face image, and the user enters the fingerprint, and then sends the authentication sequence number and the fingerprint to the server for authentication.

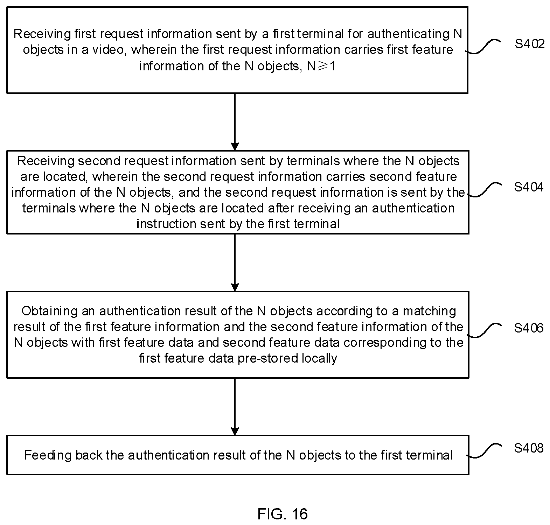

FIG. 16 is a third flowchart of a method for object authentication according to the embodiments of the present disclosure. As shown in FIG. 16, the method is applied to an authentication device, and includes the following steps.

Step S402: receiving first request information sent by a first terminal for authenticating N objects in a video, wherein the first request information carries first feature information of the N objects, N≥1.

Wherein, the authentication device is a server or a user terminal.

Step S404: receiving second request information sent by terminals where the N objects are located, wherein the second request information carries second feature information of the N objects, and the second request information is sent by the terminals where the N objects are located after receiving an authentication instruction sent by the first terminal.

Step S406: obtaining an authentication result of the N objects according to a matching result of the first feature information and the second feature information of the N objects with first feature data and second feature data corresponding to the first feature data pre-stored locally.

In the present embodiment, the above step S406 may specifically include:
matching the first feature information of the N objects with the first feature data pre-stored locally to obtain the second feature data corresponding to the first feature data of the N objects; and
matching the second feature information of the N objects with the second feature data, and obtaining the authentication result of the N objects according to the matching result.

For example, the server successively receives authentication request messages sent by A's mobile phone and B's mobile phone, wherein the authentication request message sent by A's mobile phone includes an authentication sequence number and facial data, and the authentication request message sent by B's mobile phone includes an authentication sequence number and fingerprint data. The server compares the facial data and fingerprint data corresponding to the same authentication sequence number with the facial data and fingerprint data in the database. There are many ways to perform the comparison, one of which is: since fingerprint data is simpler than facial data, the fingerprint data in the database is first traversed and compared to find matching fingerprint data, then the facial data mapped to the fingerprint data is obtained from a mapping table of the fingerprint data, and the facial data is compared with the facial data in the authentication request. If the matching is successful, it indicates that the authentication is passed; otherwise, the authentication fails. Messages of the authentication result are simultaneously sent to A's mobile phone and B's mobile phone, and the messages include the authentication sequence number and the authentication result, indicating that the authentication result is for that authentication sequence number.

Step S408: feeding back the authentication result of the N objects to the first terminal.

Through the above steps S402 to S408, the problem in the related art that the technologies for recognizing AI face-swapping and voice-swapping are too complex can be solved, making object recognition more convenient and reliable.

In an embodiment, the above steps S406 to S408 include:
in response to N=1,
the first request information carrying an authentication sequence number associated with the first terminal;
the authentication instruction carrying the authentication sequence number, and the second request information carrying the authentication sequence number;
obtaining the authentication result of the N objects according to a matching result of the first feature information corresponding to the authentication sequence number and the second feature information corresponding to the authentication sequence number with first feature data and second feature data corresponding to the first feature data pre-stored locally; and
feeding back the authentication result of the N objects to the first terminal according to the authentication sequence number.
in response to N>1, the first request information carrying N authentication sequence numbers corresponding to the N objects and associated with the first terminal, wherein one object corresponds to one authentication sequence number; the authentication instruction carrying the authentication sequence number corresponding to the object, and the second request information carrying the authentication sequence number; determining the first feature information and the second feature information of the N objects according to the N authentication sequence numbers, and then obtaining the authentication result of the N objects according to a matching result of the first feature information and the second feature information with first feature data and second feature data corresponding to the first feature data pre-stored locally, wherein the authentication result carries the authentication sequence numbers of the N objects; or,
the first request information carrying an authentication sequence number associated with the first terminal and numbers corresponding to the N objects, wherein one object corresponds to one number; the authentication instruction carrying the authentication sequence number and the numbers corresponding to the N objects, and the second request information carrying the authentication sequence number and the numbers of the N objects; determining the first feature information and the second feature information of the N objects according to the authentication sequence number and the numbers of the N objects, and then obtaining the authentication result according to a matching result of the first feature information and the second feature information with first feature data and second feature data corresponding to the first feature data pre-stored locally, wherein the authentication result carries the numbers of the N objects.

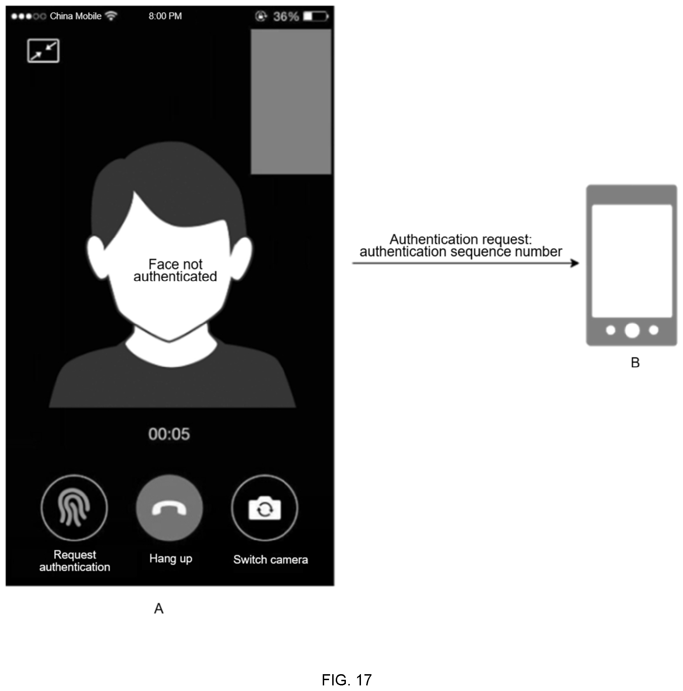

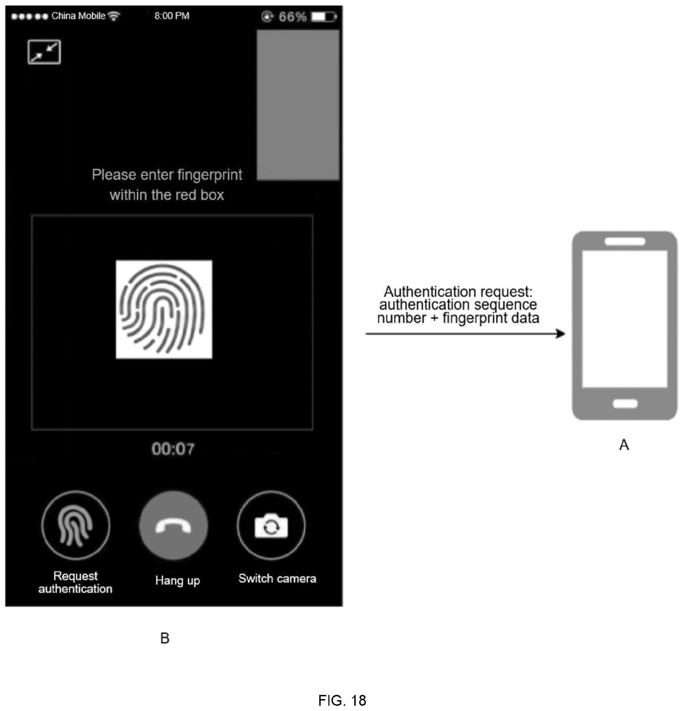

In an embodiment, the authentication device is a user terminal. FIG. 17 is a second call interface diagram for performing identity authentication of a method for object authentication according to the embodiments of the present disclosure. As shown in FIG. 17, in a video call, when A wants to authenticate B's identity, the authentication request only needs to be sent to B, and does not need to be sent to the server. FIG. 18 is a fifth schematic diagram of requesting authentication of a method for object authentication according to the embodiments of the present disclosure. As shown in FIG. 18, after B enters the fingerprint, the fingerprint data only needs to be transmitted to A, and does not need to be sent to the server. A compares the fingerprint data sent by B with the fingerprint data of B stored on A's mobile phone. If the matching is successful, it indicates that the authentication is passed; otherwise, the authentication fails.

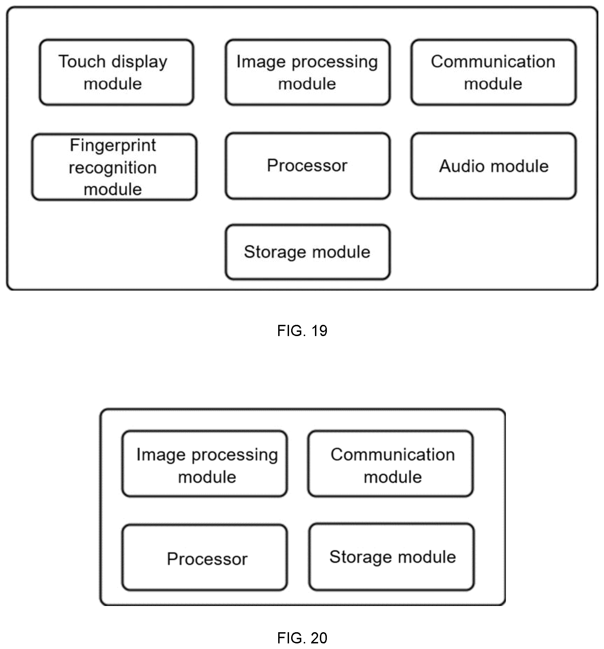

FIG. 19 is a schematic structural diagram of a terminal device of a method for object authentication according to the embodiments of the present disclosure. As shown in FIG. 19, the terminal includes: a touch display module, an image processing module, a communication module, a fingerprint recognition module, a processor, an audio module, and a memory. FIG. 20 is a schematic structural diagram of an authentication server device of a method for object authentication according to the embodiments of the present disclosure. As shown in FIG. 20, the authentication server includes: an image processing module, a communication module, a processor, and a storage module. The specific embodiments of the above object authentication method may be executed in the terminal and the authentication server. The structural diagrams of the terminal and the server are only examples, and the present disclosure is not limited to any specific combination of hardware and software.

In the embodiments of the present disclosure, data transmission between the first terminal, the second terminal, and the authentication device is all encrypted, which can prevent data from being stolen or tampered with. In the embodiments of the present disclosure, the first terminal provides the first feature information, the second terminal provides the second feature information, and the authentication result is uniformly sent by the authentication device to the first terminal and the second terminal, which can ensure the authenticity of the result.

The embodiments of the present disclosure further provide a computer-readable storage medium, the computer-readable storage medium having a computer program stored therein, wherein the computer program is configured to, when running, execute steps of the method according to any one of the above method embodiments.

In an exemplary embodiment, the above computer-readable storage medium may include, but is not limited to: various media that can store computer programs, such as a USB flash drive, a Read-Only Memory (ROM), a Random Access Memory (RAM), a removable hard disk, a magnetic disk, or an optical disk.

The embodiments of the present disclosure further provide an electronic device, including a memory and a processor, wherein the memory stores a computer program, and the processor is configured to run the computer program to execute steps of the method according to any one of the above method embodiments.

In an exemplary embodiment, the above electronic device may further include a transmission device and an input/output device, wherein the transmission device is connected to the processor, and the input/output device is connected to the processor.

For specific examples in the present embodiment, reference may be made to the examples described in the above embodiments and exemplary implementations, and the present embodiment will not repeat them here.

Obviously, those skilled in the art should understand that the above modules or steps of the present disclosure can be implemented by a general-purpose computing device, and they can be centralized on a single computing device or distributed on a network composed of multiple computing devices. They can be implemented by program code executable by the computing device, so that they can be stored in a storage device and executed by the computing device. In some cases, the steps shown or described may be executed in an order different from that herein, or they may be respectively made into individual integrated circuit modules, or multiple modules or steps among them may be made into a single integrated circuit module for implementation. In this way, the present disclosure is not limited to any specific combination of hardware and software.

The above descriptions are only preferred embodiments of the present disclosure, and are not intended to limit the present disclosure. For those skilled in the art, the present disclosure may have various modifications and changes. Any modifications, equivalent substitutions, improvements, etc. made within the principles of the present disclosure shall be included in the scope of protection of the present disclosure.

## Claims

1. A method for object authentication, applied to a first terminal, the method comprising:
sending, to an authentication device, first request information for authenticating N objects in a video, wherein the first request information carries first feature information of the N objects, N≥ 1;
sending an authentication instruction to terminals where the N objects are located, wherein the authentication instruction is used for instructing the terminal to send second request information to the authentication device, and the second request information carries second feature information of the N objects; and
receiving an authentication result of the N objects fed back by the authentication device, wherein the authentication result is obtained by the authentication device according to a matching result of the received first feature information and second feature information of the N objects with first feature data and second feature data corresponding to the first feature data pre-stored locally.

2. The method according to claim 1, wherein in response to N=1, receiving the authentication result of the N objects fed back by the authentication device comprises:
the first request information carrying an authentication sequence number associated with the first terminal;
the authentication instruction carrying the authentication sequence number, and the second request information carrying the authentication sequence number; and
receiving the authentication result of the N objects fed back by the authentication device according to the authentication sequence number, wherein the authentication result is obtained by the authentication device according to the matching result of the first feature information corresponding to the authentication sequence number and the second feature information corresponding to the authentication sequence number with the first feature data and the second feature data corresponding to the first feature data pre-stored locally.

3. The method according to claim 1, wherein in response to N>1, receiving the authentication result of the N objects fed back by the authentication device comprises:
the first request information carrying N authentication sequence numbers corresponding to the N objects and associated with the first terminal, wherein one object corresponds to one authentication sequence number;
the authentication instruction carrying the authentication sequence numbers corresponding to the objects, and the second request information carrying the authentication sequence numbers; and
receiving the authentication result of the N objects fed back by the authentication device according to the authentication sequence numbers, wherein the authentication result carries the authentication sequence numbers of the N objects, and identifying the authentication result of the N objects according to the authentication sequence numbers of the N objects, wherein the authentication result is obtained by the authentication device determining the first feature information and the second feature information of the N objects according to the N authentication sequence numbers, and then obtaining the authentication result according to the matching result of the first feature information and the second feature information with the first feature data and the second feature data corresponding to the first feature data pre-stored locally.

4. The method according to claim 1, wherein in response to N>1, receiving the authentication result of the N objects fed back by the authentication device further comprises:
the first request information carrying an authentication sequence number associated with the first terminal and numbers corresponding to the N objects, wherein one object corresponds to one number;
the authentication instruction carrying the authentication sequence number and the numbers corresponding to the N objects, and the second request information carrying the authentication sequence number and the numbers of the N objects; and
receiving the authentication result of the N objects fed back by the authentication device according to the authentication sequence number, wherein the authentication result of the N objects carries the numbers of the N objects, and identifying the authentication result of the N objects according to the numbers of the N objects, wherein the authentication result is obtained by the authentication device determining the first feature information and the second feature information of the N objects according to the received authentication sequence number and the numbers of the N objects, and then obtaining the authentication result according to the matching result of the first feature information and the second feature information with the first feature data and the second feature data corresponding to the first feature data pre-stored locally.

5. The method according to claim 1, wherein:
the first feature information comprises at least one of the following: facial feature information, voiceprint feature information;
the second feature information comprises at least one of the following: fingerprint feature information, iris feature information;
the first feature data comprises at least one of the following: facial feature data, voiceprint feature data; and
the second feature data comprises at least one of the following: fingerprint feature data, iris feature data.

6. The method according to claim 1, further comprising:
in response to not receiving, within a predetermined time, the authentication result of a target object of the N objects fed back by the authentication device, determining that authentication of the target object fails, wherein the target object is one or more objects of the N objects.

7. The method according to claim 1, after sending the authentication instruction to terminals where the N objects are located, the method further comprises:
receiving rejection authentication instruction information fed back by a terminal where a target object of the N objects is located, wherein the target object is one or more objects of the N objects; and
determining, according to the rejection authentication instruction information, that authentication of the target object fails.

8. The method according to claim 1, before sending, to the authentication device, the first request information for authenticating the N objects in the video, the method further comprises:
presenting, on an interface of the video, an indication that the N objects are not authenticated.

9. The method according to claim 8, wherein presenting, on the interface of the video, the indication that the N objects are not authenticated comprises:
in response to detecting that audio of the video comprises a preset keyword, presenting, on the interface of the video, the indication that the N objects are not authenticated.

10. The method according to claim 1, further comprising:
presenting, on an interface of the video, an indication that the N objects are authenticated or
authentication fails according to the authentication result.

11. The method according to claim 1, wherein sending, to the authentication device, the first request information for authenticating the N objects in the video comprises:
acquiring a first touch operation instruction for authenticating the N objects, and in response to the first touch operation instruction, sending, to the authentication device, the first request information for authenticating the N objects.

12. The method according to claim 11, before acquiring the first touch operation instruction for authenticating the N objects, the method further comprises:
repeatedly performing the following operations until extraction of the first feature information of the N objects is completed:
acquiring a second touch operation instruction for selecting a current object, and in response to the second touch operation instruction, extracting the first feature information of the current object.

13. The method according to claim 12, wherein extracting the first feature information of the current object comprises:
acquiring position information of the second touch operation instruction on a display screen; and
extracting the first feature information of the current object in the video corresponding to the position information.

14. The method according to claim 3, wherein sending, to the authentication device, the first request information for authenticating the N objects in the video comprises:
repeatedly performing the following operations until the N authentication sequence numbers corresponding to the N objects and associated with the first terminal are generated:
acquiring a third touch operation instruction for selecting a current object, and in response to the third touch operation instruction, extracting the first feature information of the current object, and generating an authentication sequence number corresponding to the current object and associated with the first terminal.

15. The method according to claim 4, wherein sending, to the authentication device, the first request information for authenticating the N objects in the video comprises:
generating the authentication sequence number associated with the first terminal; and
repeatedly performing the following operations until numbers corresponding to the N objects are generated:
acquiring a fourth touch operation instruction for selecting a current object, and in response to the fourth touch operation instruction, extracting the first feature information of the current object, and generating a number corresponding to the current object.

16. The method according to claim 14 or 15, wherein sending, to the authentication device, the first request information for authenticating the N objects in the video further comprises:
acquiring a fifth touch operation instruction for requesting authentication, and in response to the fifth touch operation instruction, sending, to the authentication device, the first request information for authenticating the N objects in the video.

17. A method for object authentication, applied to a second terminal, the method comprising:
receiving an authentication instruction sent by a first terminal after the first terminal sends, to an authentication device, first request information for authenticating N objects in a video, wherein the first request information carries first feature information of the N objects, N≥1; and
sending second request information to the authentication device according to the authentication instruction, so that the authentication device obtains an authentication result of the N objects, wherein the second terminal is terminals where the N objects are located, the second request information carries second feature information of the N objects, and the authentication result is obtained by the authentication device according to a matching result of the received first feature information and second feature information of the N objects with first feature data and second feature data corresponding to the first feature data pre-stored locally.

18. The method according to claim 17, before sending the second request information to the authentication device according to the authentication instruction, the method further comprises:
performing the following operations until extraction of the second feature information of the N objects is completed:
acquiring a first touch instruction for performing identity authentication on a current object, and
in response to the first touch instruction, extracting the second feature information of the current object.

19. The method according to claim 18, wherein extracting the second feature information of the current object comprises:
acquiring a second touch instruction for entering the second feature information of the current object, and in response to the second touch instruction, extracting the second feature information of the current object.

20. The method according to claim 19, before acquiring the second touch instruction for entering the second feature information of the current object, the method further comprises:
acquiring a third touch instruction for selecting the current object from the N objects on a display screen interface, and in response to the third touch instruction, presenting, on the display screen interface, a prompt for entering the second feature information.

21. The method according to claim 17, wherein sending the second request information to the authentication device according to the authentication instruction comprises:
extracting, according to the authentication instruction, the second feature information of the N objects in a predetermined order, and sending the second request information to the authentication device.

22. The method according to claim 21, wherein extracting, according to the authentication instruction, the second feature information of the N objects in a predetermined order comprises:
the authentication instruction carrying N authentication sequence numbers or N numbers corresponding to the N objects, wherein one object corresponds to one authentication sequence number or one number; and
sequentially extracting, according to an order of the N authentication sequence numbers or the N numbers, the second feature information of a current object corresponding to a current authentication sequence number or a current number.

23. The method according to claim 22, wherein extracting the second feature information of the current object corresponding to the current authentication sequence number or the current number comprises:
presenting, on a display screen interface, a prompt for the current object corresponding to the current authentication sequence number or the current number to enter the second feature information; and
acquiring a fourth touch instruction for entering the second feature information of the current object, and in response to the fourth touch instruction, extracting the second feature information of the current object.

24. The method according to claim 22, after extracting the second feature information of the current object, the method further comprises:
removing, from a display screen interface, the current authentication sequence number or the current number and the current object.

25. A method for object authentication, applied to an authentication device, the method comprising:
receiving first request information sent by a first terminal for authenticating N objects in a video, wherein the first request information carries first feature information of the N objects, N≥1;
receiving second request information sent by terminals where the N objects are located, wherein the second request information carries second feature information of the N objects, and the second request information is sent by the terminals where the N objects are located after receiving an authentication instruction sent by the first terminal;
obtaining an authentication result of the N objects according to a matching result of the first feature information and the second feature information of the N objects with first feature data and second feature data corresponding to the first feature data pre-stored locally; and
feeding back the authentication result of the N objects to the first terminal.

26. The method according to claim 25, wherein the authentication device is a server or a user terminal.

27. The method according to claim 25, wherein obtaining the authentication result of the N objects according to the matching result of the first feature information and the second feature information of the N objects with first feature data and second feature data corresponding to the first feature data pre-stored locally comprises:
matching the first feature information of the N objects with the first feature data pre-stored locally to obtain the second feature data corresponding to the first feature data of the N objects; and
matching the second feature information of the N objects with the second feature data, and obtaining the authentication result of the N objects according to the matching result.

28. The method according to claim 25, wherein obtaining the authentication result of the N objects according to the matching result of the first feature information and the second feature information of the N objects with first feature data and second feature data corresponding to the first feature data pre-stored locally comprises:
in response to N=1, the first request information carrying an authentication sequence number associated with the first terminal, the authentication instruction carrying the authentication sequence number, and the second request information carrying the authentication sequence number; obtaining the authentication result of the N objects according to the matching result of the first feature information corresponding to the authentication sequence number and the second feature information corresponding to the authentication sequence number with the first feature data and the second feature data corresponding to the first feature data pre-stored locally; or,
in response to N>1, the first request information carrying N authentication sequence numbers corresponding to the N objects and associated with the first terminal, wherein one object corresponds to one authentication sequence number; the authentication instruction carrying the authentication sequence numbers corresponding to the objects, and the second request information carrying the authentication sequence numbers; determining the first feature information and the second feature information of the N objects according to the N authentication sequence numbers, and then obtaining the authentication result according to the matching result of the first feature information and the second feature information with the first feature data and the second feature data corresponding to the first feature data pre-stored locally, wherein the authentication result carries the authentication sequence numbers of the N objects; or,
the first request information carrying an authentication sequence number associated with the first terminal and numbers corresponding to the N objects, wherein one object corresponds to one number; the authentication instruction carrying the authentication sequence number and the numbers corresponding to the N objects, and the second request information carrying the authentication sequence number and the numbers of the N objects; determining the first feature information and the second feature information of the N objects according to the authentication sequence number and the numbers of the N objects, and then obtaining the authentication result according to the matching result of the first feature information and the second feature information with the first feature data and the second feature data corresponding to the first feature data pre-stored locally, wherein the authentication result carries the numbers of the N objects.

29. A computer-readable storage medium, having a computer program stored therein, wherein the computer program is configured to, when running, execute the method according to any one of claims 1-16, 17-24, and 25-28.

30. An electronic device, comprising a memory, a processor, wherein the memory stores a computer program, and the processor is configured to run the computer program to execute the method according to any one of claims 1-16, 17-24, and 25-28.
